# EUROPEAN PATENT APPLICATION

(11) **EP 1 905 656 A1**
(43) Date of publication of application: **02.04.2008**
(21) Application number: 07017675.5
(22) Date of filing: 10.09.2007
(51) Int. Cl.: B60R 21/015, B60W 40/08, B60W 30/08, G08B 21/06

(54) **Occupant detection system, warning system, braking system, and vehicle**

(30) Priority: 28.09.2006 JP 2006265191
(71) Applicant: TAKATA CORPORATION, Minato-ku, Tokyo 106-8510 (JP)
(72) Inventor: Yokoo, Masato, Minatu-ku Tokyo 106-8510 (JP); Aoki, Hiroshi, Minatu-ku Tokyo 106-8510 (JP); Mita, Hirofumi, Minatu-ku Tokyo 106-8510 (JP); Hakomori, Yuu, Minatu-ku Tokyo 106-8510 (JP)
(74) Representative: Banzer, Hans-Jörg

(57) **Abstract**

In order to provide an occupant detection system (100) to be installed in a vehicle, provided with a technology which is effective for precisely detecting whether or not the attention of a driver is diminished, the occupant detection system (100) of the present invention comprises a 3D camera (112), an information extracting section (152) for extracting information about the head and hand(s) of a driver based on three-dimensional images taken by the 3D camera (112), a detection processing section (154) for detecting whether or not the positions or movement of the head and hand(s) of the driver are in predetermined specified states based on the information extracted by the information extracting section (152), an integration processing section (156) which, when at least either the driver's head or the driver's hand(s) is out of the specified state, adds up time in which the head or hand(s) is not in the specified state, and a determination processing section (158) which, based on the time added up by the integration processing section (156), determines that the driver's attention is diminished when the time added up exceeds a preset reference value and determines that the driver's attention is not diminished when the time added up is equal to or less than the preset reference value.

## Description

The present invention relates to an occupant detection system to be installed in a vehicle and, more particularly, a technology for developing an occupant detection system for detecting information about a driver on a vehicle seat.

### Background of the Invention

Conventionally, there are known various techniques for detecting an object occupying a vehicle seat by using a photographing means such as a camera. For example, disclosed in JP-A-2003-294855 is a configuration of an occupant detecting apparatus in which a camera capable of two-dimensionally photographing an object is arranged in front of a vehicle occupant to detect the position of the vehicle occupant by the camera.

### Disclosure of the Invention

### Problems to be solved by the Invention

By the way, in such a case where a driver is out of the normal position (standard sitting position) on a vehicle seat, is dozing, or is inattentive, it is estimated that the driver will fail to operate or steer the vehicle due to diminished attention of the driver. Accordingly, there is a demand to establish a technology of precisely detecting whether or not the attention of a driver is diminished so as to enable this technology to be used for various driving aids. However, it is difficult to precisely detect whether or not the attention of a driver is diminished in the configuration of using a camera two-dimensionally photographing a vehicle occupant, for the following reasons. That is, when there is a small difference in color between the background and a driver or a small difference in color between the skin and the clothes of a driver, a problem arises that it is difficult to securely detect the driver's head and/or hand(s). In case of detecting, for example, a head and/or hand(s) of a driver by photographing the driver from the front side of the vehicle, a problem arises that it is hard to recognize the anteroposterior position of the predetermined region. For example, in case of detecting a head of a driver, it is hard to recognize the relation in the anteroposterior position of the head between when the driver leans forward and when the driver sits in the normal state.

The present invention is made in view of the aforementioned point and it is an object of the present invention to provide a technology, relating to an occupant detecting system to be installed in a vehicle, which is effective for precisely detecting whether or not the attention of a driver is diminished.

### Means to solve the Problems

According to the invention, this object is achieved by an occupant detection system as defined in claim 1, a warning system as defined in claim 4, a braking system as defined in claim 5, and a vehicle as defined in claim 6 or 7. The dependent claims define preferred and advantageous embodiments of the invention.

For achieving the object, the present invention is configured. Though the present invention is typically adapted to an occupant detecting system in an automobile for detecting information about a driver on a vehicle seat, the present invention can be also adapted to an occupant detecting system in a vehicle other than the automobile.

An occupant detection system of the present invention comprises at least: a photographing section, an information extracting section, a detection processing section, an integration processing section, and a determination processing section.

The photographing section is a photographing means for taking three-dimensional images of a driver on a vehicle seat within a predetermined moving range. As the photographing section, a 3-D type monocular C-MOS camera, a 3-D type pantoscopic stereo camera, or a laser scanner may be employed. The "predetermined moving range" used here may be typically an area where the head and the upper body of the driver sitting in the vehicle seat may exist, an area where the hands of the driver may exist (for example, a steering wheel, an instrument panel, a shift lever, a parking brake lever, an armrest, and the vehicle seat). The photographing section may be one or more, if necessary.

The information extracting section has a function of extracting at least either information about the position of the driver's head or the movement of the driver's head or information about the position of the driver's hand(s) or the movement of the driver's hand(s) based on the three-dimensional images taken by the photographing section. Since the three-dimensional images taken by the photographing section are used in this invention, information about the driver's head and/or hand(s) are precisely extracted. The information about the driver's head and/or hand(s) is effective in determining whether or not the driver is out of the normal position on a vehicle seat, is dozing, or is inattentive, that is, the driver's attention is diminished.

The detection processing section has a function of detecting whether or not the position or the movement of at least either the driver's head or the driver's hand(s) is in a preset specified state based on the information extracted by the information extracting section. Specifically, as for the position of the driver's head or the position of the driver's hand(s), whether or not the position is in a specified location is detected. As for the movement of the driver's head or the movement of the driver's hand(s), whether or not the movement is a specified movement is detected.

The integration processing section has a function of, when at least either the driver's head or the driver's hand(s) is out of the specified state based on the detection results of the detection processing section, adding up time in which the driver's head or hand(s) is not in the specified state. Specifically, as for the position of the driver's head or the position of the driver's hand(s), when the position is out of a specified location, the integration processing section adds up time in which the position is out of the specified location. As for the movement of the driver's head or the movement of the driver's hand(s), when the movement is out of a specified movement, the integration processing section adds up time in which the movement is out of the specified movement.

The determination processing section has a function of, based on the time added up by the integration processing section, determining that the driver's attention is diminished when the time added up exceeds a preset reference value and determines that the driver's attention is not diminished when the time added up is equal to or less than the preset reference value. That is, this determination is made based on the fact that the state that time in which at least either the driver's head or the driver's hand(s) is out of the specified location or the specified state is relatively long is considered as a state that the driver's attention is diminished, that is, a state that the driver will easily delay to react for operation such as steering.

According to the arrangement of the occupant detection system of the present invention, the precise detection of whether or not the driver's attention is diminished is achieved by the respective processes based on the three-dimensional images taken by the photographing section. The result of determination by the determination processing section about whether or not the driver's attention is diminished may be used for driving assist control in a warning device for informing of a possibility of a vehicle collision, a braking device for applying braking forces to the vehicle, a seat belt device for controlling the winding of a seat belt by a retractor, a device for preventing an occupant from submarining along the seat surface under the seat belt by pushing up the seat cushion in the event of a collision, a device for restraining a driver by an airbag, and a device to be adjusted according to the attitude of the driver (for example, a device for adjusting the height of a headrest of the seat).

An occupant detection system of another aspect of the present invention further comprises an actuation signal outputting section. The actuation signal outputting section is adapted to output an actuation signal to one or more warning devices for alarming the driver when a vehicle collision is predicted. The actuation signal outputting section is also adapted to vary the output mode of the actuation signal to the one or more warning devices between when the determination processing section determines that the driver's attention is diminished and when the determination processing section determines that the driver's attention is not diminished. As specific examples for varying the output mode of the actuation signal, a mode hastening the output timing of an actuation signal to a certain warning device, a mode increasing the output intensity of an actuation signal to a certain warning device, and a mode changing the output timings of actuation signals to a plurality of warning devices when it is determined that the driver's attention is diminished may be employed. Only required for the actuation signal outputting section is to output a control signal to the warning device(s). The actuation signal outputting section may have an arrangement that a control section such as an ECU is arranged between the actuation signal outputting section and the warning device(s) or an arrangement of outputting a control signal directly to the warning device(s).

The aforementioned arrangement of the occupant detection system of the present invention is effective for constructing an occupant detection system capable of stirring the driver to concentrate on driving in a case where it is estimated that the driver's attention is diminished, a case where it is estimated that the driver will delay in reaction, and a case where it is estimated that the driver may become accustomed to the alarm.

An occupant detection system of still another aspect of the present invention further comprises a control signal outputting section. The control signal outputting section is adapted to output a control signal for controlling the start timing of braking to a braking device for applying braking forces to the vehicle according to a pedaling force of the driver. The control signal outputting section is also adapted to vary the output mode of the control signal to the braking device between when the determination processing section determines that the driver's attention is diminished and when the determination processing section determines that the driver's attention is not diminished. As specific examples for varying the output mode of the actuation signal, for the purpose of hastening the start timing of braking, a mode in which the clearances between the brake pads and the brake disk or between the brake pads and the brake drum are decreased and a mode in which the operation speed of the brake pads is increased may be suitably employed.

The aforementioned arrangement of the occupant detection system of the present invention is effective for constructing an occupant detection system capable of preventing the driver from delaying in braking operation in a case where it is estimated that the driver's attention is diminished and a case where it is estimated that the driver will delay in reaction.

A warning system of the present invention comprises at least: an occupant detection system as mentioned above, one or more warning devices for alarming the driver, and an actuation signal outputting section. The actuation signal outputting section is adapted to output an actuation signal to the one or more warning devices when a vehicle collision is predicted. The actuation signal outputting section is also adapted to vary the output mode of the actuation signal to the one or more warning devices between when the determination processing section determines that the driver's attention is diminished and when the determination processing section determines that the driver's attention is not diminished.

The aforementioned arrangement of the warning system of the present invention is effective for constructing a warning system capable of stirring the driver to concentrate on driving in a case where it is estimated that the driver's attention is diminished, a case where it is estimated that the driver will delay in reaction, and a case where it is estimated that the driver may become accustomed to the alarm.

A braking system of the present invention comprises at least an occupant detection system as mentioned above, a braking device for applying braking forces to the vehicle according to a pedaling force of a driver, and a control signal outputting section.

The control signal outputting section is adapted to output a control signal for controlling the start timing of braking to the braking device. The control signal outputting section is also adapted to vary the output mode of the control signal to the braking device between when the determination processing section determines that the driver's attention is diminished and when the determination processing section determines that the driver's attention is not diminished.

The aforementioned arrangement of the braking system of the present invention is effective for constructing a braking system capable of preventing the driver from delaying in braking operation in a case where it is estimated that the driver's attention is diminished and a case where it is estimated that the driver will delay in reaction.

A vehicle of the present invention comprises at least an engine/running system, an electrical system, an actuation control device, and an occupant detecting device.

The engine/running system is a system involving an engine and a running mechanism of the vehicle. The electrical system is a system involving electrical parts used in the vehicle. The actuation control device is a device having a function of conducting the actuation control of the engine/running system and the electrical system. The occupant detecting device is adapted to detect information about a driver on a vehicle seat. The occupant detecting device comprises an occupant detecting system as mentioned above.

According to this arrangement of the vehicle of the present invention, there is provided a vehicle mounted with an occupant detecting system capable of precisely detecting whether or not a driver's attention is diminished by respective processes based on the three-dimensional images taken by the photographing section.

A vehicle of the present invention comprises at least an engine/running system, an electrical system, an actuation control device, and at least either the warning system as mentioned above or the braking system as mentioned above.

The engine/running system is a system involving an engine and a running mechanism of the vehicle. The electrical system is a system involving electrical parts used in the vehicle. The actuation control device is a device having a function of conducting the actuation control of the engine/running system and the electrical system.

According to this arrangement of the vehicle of the present invention, there is provided a vehicle mounted with a warning system capable of stirring the driver to concentrate on driving in a case where it is estimated that the driver's attention is diminished, a case where it is estimated that the driver will delay in reaction, and a case where it is estimated that the driver may become accustomed to the alarm and/or a braking system capable of preventing the driver from delaying in braking operation in a case where it is estimated that the driver's attention is diminished and a case where it is estimated that the driver will delay in reaction.

### Effects of the Invention

As described, the present invention enables precise detection of whether or not a driver's attention is diminished is achieved in an occupant detecting system to be installed in a vehicle.

### Brief Explanation of the Drawings

Fig. 1 is an illustration showing a system configuration of an occupant detection system 100 to be installed in a vehicle according to an embodiment.

Fig. 2 is a flow chart of "warning control process" for controlling a warning device as an operation device 210 of the embodiment.

Fig. 3 is a flow chart of "head and hand position-detecting process" in Fig. 2.

Fig. 4 is a flow chart of "state-of-head determining process" in Fig. 2.

Fig. 5 is a flow chart of "state-of-hand determining process" in Fig. 2

Fig. 6 is a flow chart of "state determining process about hands gripping the steering wheel" in Fig. 2.

Fig. 7 is an illustration showing an area S 1 in which the head of a driver who sits in a vehicle seat 10 in the normal state exists in the embodiment.

Fig. 8 is a plan view showing a lower area S2 of a steering wheel 12.

### Best Modes for carrying out the Invention

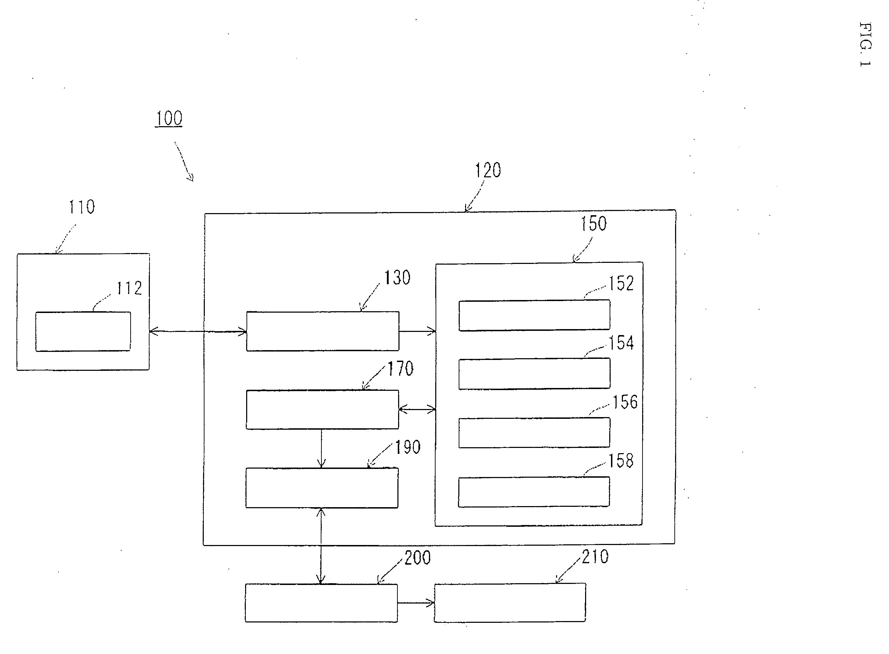

Hereinafter, an embodiment of the present invention will be described with reference to drawings. First, an occupant detecting system 100 as an embodiment of "occupant detection system" or "occupant detection device" of the present invention will be described with reference to Fig. 1.

The configuration of an occupant detection system 100, which is installed in a vehicle, of this embodiment is shown in Fig. 1. As shown in Fig. 1, the occupant detection system 100 of this embodiment is installed in an automobile as the "vehicle" of the present invention for detecting information about a driver and mainly comprises a photographing means 110 and a control means 120. Further, the occupant detection system 100 cooperates together with an ECU 200, as an actuation control device for the vehicle, and an operation device 210 to compose a certain vehicle aiding system (corresponding to the "warning system" and "braking system" of the present invention). The vehicle comprises, but not shown, an "engine/running system" involving an engine and a running mechanism of the vehicle, an electrical system involving electrical parts used in the vehicle, and an actuation control device (ECU 200) for conducting the actuation control of the engine/running system and the electrical system.

The photographing means 110 of this embodiment comprises a 3D camera 112 as the photographing device and a data transfer circuit. The 3D camera 112 is a 3-D (three-dimensional) camera (sometimes called "monitor") of a C-MOS or CCD (charge-coupled device) type in which light sensors are arranged into an array (lattice) structure. By this camera, three-dimensional images can be taken from a single view point. Thus, distance relative to the object is measured a plurality of times to detect a three-dimensional surface profile, thereby identifying the presence or absence, the size, the position, and the attitude of the driver. As the 3D camera 112, a 3-D type monocular C-MOS camera or a 3-D type pantoscopic stereo camera may be employed. The photographing means 110 (the 3D camera 112) corresponds to the "photographing section for taking three-dimensional images" of the present invention. Instead of the 3D camera 112, a laser scanner capable of obtaining three-dimensional images may be employed.

The camera 112 of this embodiment is mounted to an area around an inner rearview mirror, an area around a side mirror, a central portion in the lateral direction of a dashboard, or the like of the automobile in such a manner as to face a predetermined range for movement of the driver. The "predetermined range for movement of the driver" used here may be typically an area where the head and the upper body of the driver sitting in the vehicle seat may exist, an area where the hands of the driver may exist (for example, a steering wheel, an instrument panel, a shift lever, a parking brake lever, an armrest, and the vehicle seat). By using the 3D camera 112, information about the predetermined range for movement of the driver sitting in the vehicle seat is measured periodically a plurality of times. Mounted on the occupant detection system 100 of this embodiment is a power source unit for supplying power from a vehicle buttery to the 3D camera 112. The camera 112 is set to start its photographing operation when the ignition key is turned ON or when a seat sensor (not shown) installed in the driver seat detects an occupant sitting in the driver seat.

The control means 120 of this embodiment further comprises at least an image processing unit 130, a computing unit (MPU) 150, a storing unit 170, an input/output unit 190, and peripheral devices (not shown). The control means 120 is a means of deriving information about the driver on the vehicle seat based on images taken by the 3D camera 112.

The image processing unit 130 is a means for controlling the camera to obtain good quality images and for controlling the image processing for processing images taken by the 3D camera 112 to be used for analysis. Specifically, as for the control of the camera, the adjustment of the frame rate, the shutter speed, and the sensitivity, and the accuracy correction are conducted to control the dynamic range, the brightness, and the white balance. As for the control of the image processing, the spin compensation for image, the correction for distortion of the lens, the filtering operation, and the difference operation as image preprocessing operations are conducted and the configuration determination and the trucking as image recognition processing operations are conducted.

The computing unit 150 of this embodiment comprises at least an information extracting section 152, a detection processing section 154, an integration processing section 156, and a determination processing section 158. As for the computing unit 150, some of the information extracting section 152, the detection processing section 154, the integration processing section 156, and the determination processing section 158 may be combined.

The information extracting section 152 composing the computing unit 150 carries out a process of extracting information about the driver based on the information form the image processing unit 130. Specifically, at least either information about the position or movement of the driver's head or information about the position or movement of the driver's hand(s) is extracted (derived) by the information extracting section 152. The information extracting section 152 corresponds to the "information extracting section" of the present invention.

The detection processing section 154 composing the computing unit 150 has a function of detecting whether the position or movement of at least either the head or the hand(s) of the driver is in the predetermined specified state based on the information from the information extracting section 152. Specifically, as for the position of the head or the position of the hand(s) of the driver, it is detected by the detection processing section 154 whether or not the position is in a specified location. As for the movement of the head or the movement of the hand(s), it is detected by the detection processing section 154 whether or not the movement is a specified movement. The detection processing section 154 corresponds to the "detection processing section" of the present invention.

The integration processing section 156 composing the computing unit 150 has a function of adding up time during at least either the head or the hand(s) of the driver is out of the specified state. Specifically, in case of the position of the head or the position of the hand(s) of the driver, time during the position is out of the specified location is added up by the integration processing section 156. In case of the movement of the head or the movement of the hand(s) of the driver, time during the movement is out of the specified movement is added up by the integration processing section 156. The integration processing section 156 corresponds to the "integration processing section" of the present invention.

The determination processing section 158 composing the computing unit 150 has a function of determining whether or not the driver's attention is diminished based on the integrated time added up by the integration processing section 156. Specifically, when the integrated time added up by the integration processing section 156 exceeds a preset reference value, it is determined that the driver's attention is diminished. On the other hand, when the integrated time added up by the integration processing section 156 is equal to or less than the reference value, it is determined that the driver's attention is not diminished. The determination processing section 158 corresponds to the "determination processing section" of the present invention.

The storing unit 170 of this embodiment is a means for storing (recording) data for correction, buffer frame memory for preprocessing, defined data for recognition computing, reference patterns, and the computed results of the computing unit 150 as well as an operation control software.

The input/output unit 190 of this embodiment inputs information about the vehicle, information about traffic conditions around the vehicle, information about weather condition and about time zone, and the like to the ECU 200 for conducting controls of the entire vehicle and outputs recognition results. As the information about the vehicle, there are, for example, collision prediction information of the vehicle by a radar or camera, the state (open or closed) of a vehicle door, the wearing state of the seat belt, the operation of brakes, the vehicle speed, and the steering angle. In this embodiment, based on the information outputted from the input/output unit 190, the ECU 200 outputs actuation control signals to the operation device 210.

As the operation device 210 of this embodiment, a warning device for informing of a possibility of a vehicle collision based on the information by radar or camera, a braking device for applying braking forces to the vehicle according to a pedaling force of a driver, a seat belt device for controlling the winding of a seat belt by a retractor, a device (hereinafter, sometimes referred to as "supporting device") for preventing an occupant from submarining along the seat surface under the seat belt by pushing up the seat cushion in the event of a collision, a device for restraining a driver by an airbag, and a device to be adjusted according to the attitude of the driver (for example, a device for adjusting the height of a headrest of the seat) may be employed. Only required for the input/output unit 190 is to output a control signal to the operation device 210. As shown in Fig. 1, the input/output unit 190 may have an arrangement that the ECU 200 is arranged between the input/output unit 190 and the operation device 210 or an arrangement of outputting a control signal directly to the operation device 210.

In case that a warning device for informing of a possibility of a vehicle collision based on the information from a radar or camera is employed as the operation device 210, the warning device corresponds to the "warning device" of the present invention. In this case, the input/output unit 190 for outputting an actuation signal to the warning device corresponds to the "actuation signal outputting section" of the present invention. In case that a braking device for applying braking forces to the vehicle according to a pedaling force of a driver is employed as the operation device 210, the braking device corresponds to the "braking device" of the present invention. In this case, the input/output unit 190 for outputting a control signal to the braking device corresponds to the "control signal outputting section" of the present invention.

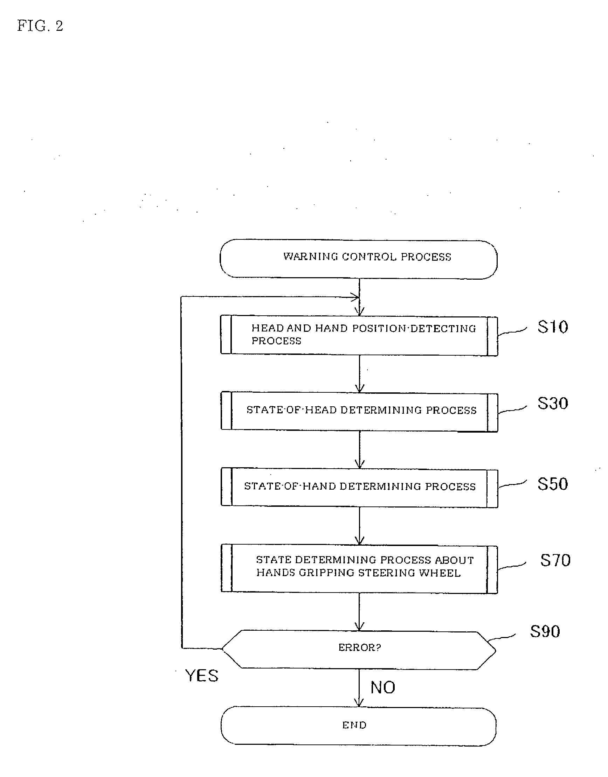

Hereinafter, the action of the occupant detection system 100 having the aforementioned structure will be specifically described with reference to Fig. 2 through Fig. 8 in addition to Fig. 1. Fig. 2 through Fig. 6 show control processes about the occupant detection system 100. The control processes are carried out by the ECU 200 according to the detection results of the occupant detection system 100 in Fig. 1.

Fig. 2 is a flow chart of "warning control process" for controlling the warning device as the operation device 210 of this embodiment. In the warning control process shown in Fig. 2, a "head and hand position-detecting process" is first conducted at step S10. Information about positions of the driver's head and hand(s) is derived by this process, but details will be described later. Then, at step S30, step S50, and step S70, the processes for discriminating the state about the driver's head and hand(s) are conducted. At step S30, the state of the driver's head is discriminated. At step S50, the state of the driver's hand(s) is discriminated. Further, at step S70, the state of the driver's hand(s) gripping the steering wheel is discriminated. At least one of step S30, step S50, and step S70 can be properly omitted, if necessary. After that, at step S90, it is determined whether or not a sequence of processes from step S10 to step S70 are properly carried out. If it is determined that the processes are not properly carried out, that is, an error occurs (Yes in step S90), the procedure returning to step S10. If it is determined that the processes are properly carried out (No in step S90), the warning control process is terminated. The determination about the error may be carried out at the respective steps of from step S 10 to step S70, in addition to or instead of step S90.

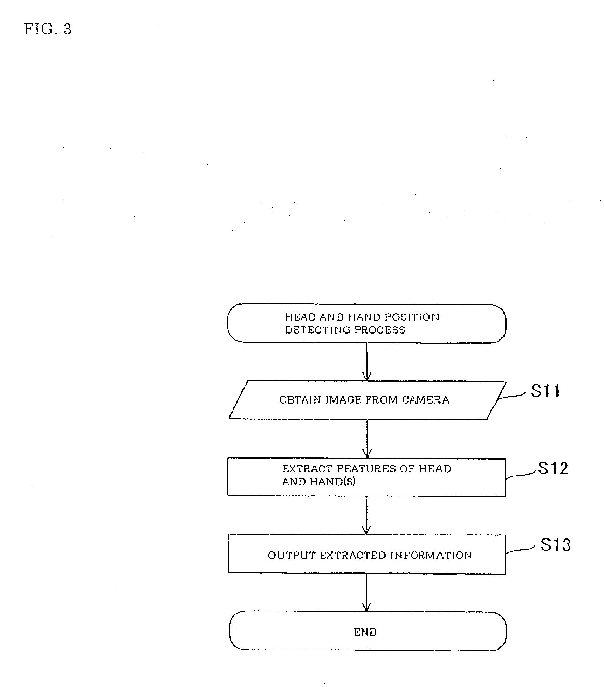

The details of step S 10 in Fig. 2 will be described with reference to Fig. 3. Fig. 3 shows a flow chart of the "head and hand position-detecting process" in Fig. 2. In this detecting process, step S 11 through step S 13 shown in Fig. 3 are sequentially conducted. First, at step S11, a three-dimensional image taken by the 3D camera 112 shown in Fig. 1 is processed by the image processing unit 130. Then, at step S12, features of the driver's head and hand(s) are extracted by the information extracting section 152 in Fig. 1. Then, the extracted information is outputted at step S 13. The information outputted at step S13 is stored temporarily in the storing unit 170 in Fig. 1.

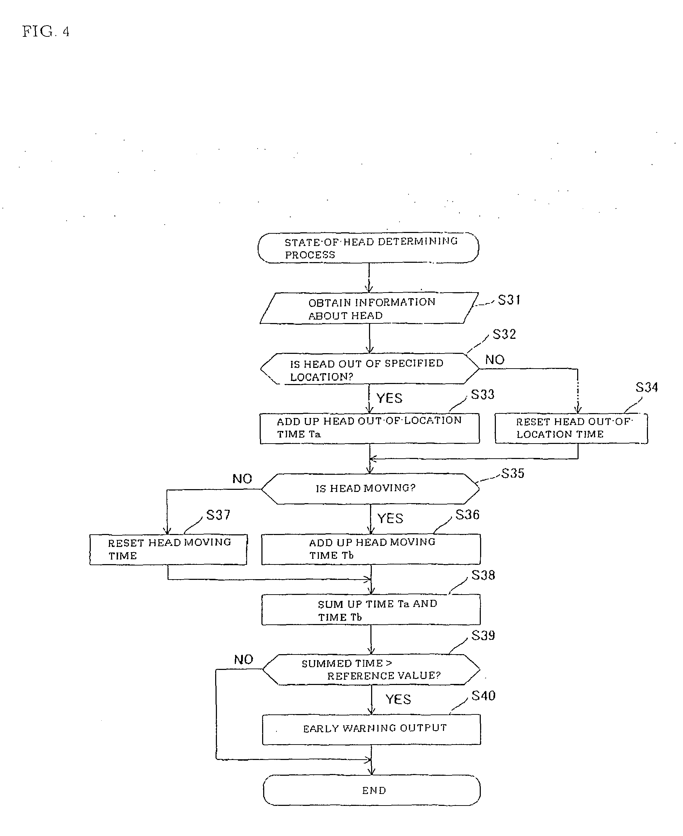

Details of step S30 in Fig. 2 will be described with reference to Fig. 4. Fig. 4 shows a flow chart of the "state-of-head determining process" in Fig. 2. In this determining process, step S31 through step S40 shown in Fig. 4 are sequentially conducted.

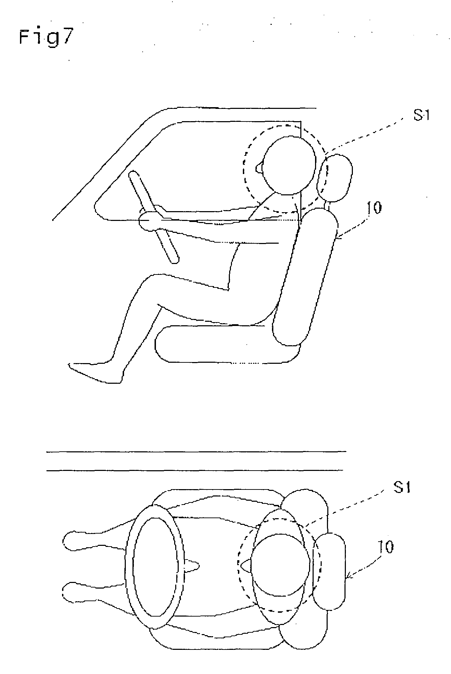

First, at step S31, the features of the driver's head are read out from the storing unit 170. At step S32, the detection processing section 154 shown in Fig. 1 detects whether or not the driver's head is in the specified location. Specifically, the range within which the driver's head should exist in the normal driving state is previously specified. When the driver's head within the aforementioned range is detected, it is detected that the driver's head is in the specified location. When the driver's head within the aforementioned range is not detected, it is detected that the driver's head is not in the specified location. The specified location used here is, for example as shown in Fig. 7, any position within an area S 1 in which the head of the driver who sits in the vehicle seat 10 in the normal state exists. When the driver's head is not in the specified location, the driver's head may be tilted right or left or forward or backward. If it is detected that the driver's head is not in the specified location (Yes in step S32), the procedure proceeds to step S33. If it is detected that the driver's head is in the specified location (No in step S32), the procedure proceeds to step S34. At step S33, the integration processing section 156 shown in Fig. 1 adds up time (hereinafter, sometimes referred to as "head out-of-location time") Ta in which the driver's head is not in the specified location. On the other hand, at step S34, the integration processing section 156 resets the head out-of-location time.

Then, at step S35, the detection processing section 154 shown in Fig. 1 detects whether or not the driver's head is moving (the head is in the specified movement state) according to the features of the driver's head read out at step S31. Specifically, the detection processing section 154 detects moment-to-moment changes of the driver's head over time. When the moment-to-moment changes are relatively many (i.e. more than a predetermined value within a predetermined time interval), it is detected that the driver's head is moving. When the moment-to-moment changes are relatively few (i.e. not more than the predetermined value within the predetermined time interval), it is detected that the driver's head is not moving or the movement of the driver's head is small. If it is detected that the driver's head is moving (Yes in step S35), the procedure proceeds to step S36. If it is detected that the driver's head is not moving or the movement of the driver's head is small (No in step S35), the procedure proceeds to step S37. At step S36, the integration processing section 156 shown in Fig. 1 adds up time (hereinafter, sometimes referred to as "head moving time") Tb in which the driver's head is moving. On the other hand, at step S37, the integration processing section 156 resets the head moving time.

Then, at step S38, the integration processing section 156 shown in Fig. 1 sums up the head out-of-location time Ta added up at step S33 and the head moving time Tb added up at step S36. At step S39, the determination processing section 158 shown in Fig. 1 compares the summed time with a preset reference value. If the summed time exceeds the reference value (Yes in step S39), an early warning output is conducted at step S40. If not (No in step S39), that is, the summed time is equal to or less than the reference value, the determination process is terminated. The early warning output at step S40 is conducted by a control of making the warning device as the operation device 210 output an alarm under the circumstances a vehicle collision is predicted and of hastening the timing of outputting an alarm by the warning device as compared to the normal condition in which the driver's head is in the normal state. The output aspect of the alarm by the warning device may be an output by buzz or sound, an output by light or display on a steering wheel or an instrument panel, an output by vibration of the steering wheel or a lever, or a combination of some of these outputs. The "normal state" used in this specification is a state in normal position (in standard sitting position) where the vehicle occupant's back is close to a seat back and the vehicle occupant's head is near to a front surface of a head rest. A state departing from the normal position is out-of-normal position of the vehicle occupant, that is, called OOP (out of position).

In this embodiment, the state that the driver's head is out of the specified location and the state that the driver's head is moving are considered as a state that the driver's attention is diminished, that is, a state that the driver will easily delay to react for operation such as steering. In this case, it is effective to conduct the early warning output at step S40 because the delay in reaction of the driver can be compensated. Instead of the control of hastening the timing for outputting the alarm by the warning device as compared to the normal condition in which the driver's head is in the normal state, a control of increasing the output intensity of an actuation signal to the warning device as compared to the normal condition in which the driver's head is in the normal state may be employed. By employing the control, it is possible to stir the driver to concentrate on driving. This is effective for a case that the driver may become accustomed to the alarm. When the driver's head is moving, the time required to conduct the processes after step S36 is shortened according to the magnitude of movement (amount of displacement) of the head. By shortening the time, it is preferable to hasten the process of detecting whether or not the driver's attention is diminished.

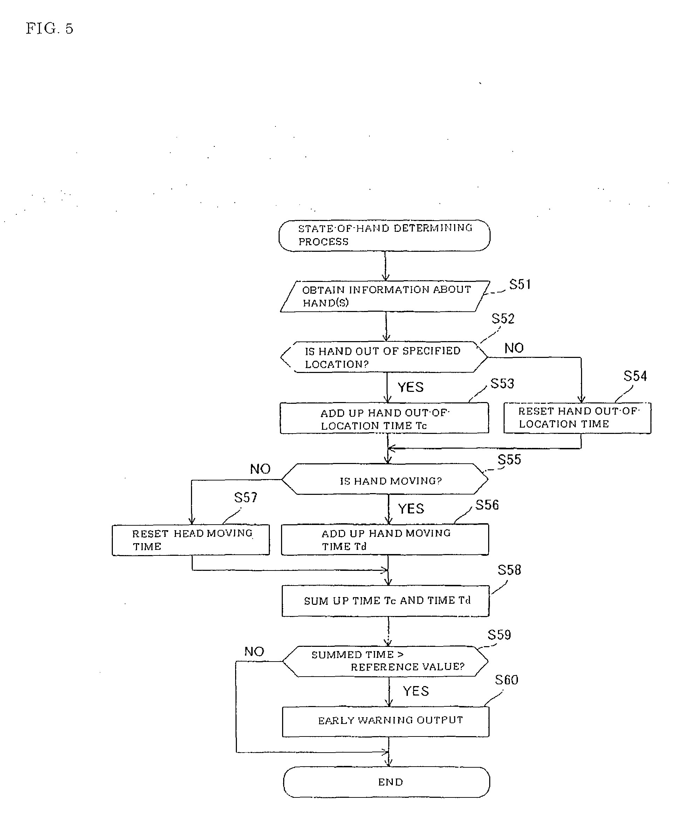

Details of step S50 in Fig. 2 will be described with reference to Fig. 5. Fig. 5 shows a flow chart of the "state-of-hand determining process" in Fig. 2. In this determining process, step S51 through step S60 shown in Fig. 5 are sequentially conducted.

First, at step S51, the features of the driver's hand(s) are read out from the storing unit 170. At step S52, the detection processing section 154 shown in Fig. 1 detects whether or not the driver's hand(s) is in the specified location. Specifically, the range within which the driver's hand(s) should exist in the normal driving state is previously specified. When the driver's hand(s) within the aforementioned range is detected, it is detected that the driver's hand(s) is in the specified location. When the driver's hand(s) within the aforementioned range is not detected, it is detected that the driver's hand(s) is not in the specified location. When the driver's hand(s) is not in the specified location, the driver's hand(s) may be positioned on a shift lever, a parking brake lever, a seat, an armrest, an instrument panel, or the driver's body. If it is detected that the driver's hand(s) is not in the specified location (Yes in step S52), the procedure proceeds to step S53. If it is detected that the driver's hand(s) is in the specified location (No in step S52), the procedure proceeds to step S54. At step S53, the integration processing section 156 shown in Fig. 1 adds up time (hereinafter, sometimes referred to as "hand out-of-location time") Tc in which the driver's hand(s) is not in the specified location. On the other hand, at step S54, the integration processing section 156 resets the hand out-of-location time.

Then, at step S55, the detection processing section 154 shown in Fig. 1 detects whether or not the driver's hand(s) is moving (the hand(s) is in the specified movement state) according to the features of the driver's hand(s) read out at step S51. Specifically, the detection processing section 154 detects moment-to-moment changes of the driver's hand(s) over time. When the moment-to-moment changes are relatively many (i.e. more than a predetermined value within a predetermined time interval), it is detected that the driver's hand(s) is moving. When the moment-to-moment changes are relatively few (i.e. not more than the predetermined value within the predetermined time interval), it is detected that the driver's hand(s) is not moving or the movement of the driver's hand(s) is small. If it is detected that the driver's hand(s) is moving (Yes in step S55), the procedure proceeds to step S56. If it is detected that the driver's hand(s) is not moving or the movement of the driver's hand(s) is small (No in step S55), the procedure proceeds to step S57. At step S56, the integration processing section 156 shown in Fig. 1 adds up time (hereinafter, sometimes referred to as "hand moving time") Td in which the driver's hand(s) is moving. On the other hand, at step S57, the integration processing section 156 resets the hand moving time.

Then, at step S58, the integration processing section 156 shown in Fig. 1 sums up the hand out-of-location time Tc added up at step S53 and the hand moving time Td added up at step S56. At step S59, the determination processing section 158 shown in Fig. 1 compares the summed time with a preset reference value. If the summed time exceeds the reference value (Yes in step S59), an early warning output is conducted at step S60. If not (No in step S59), that is, the summed time is equal to or less than the reference value, the determination process is terminated. The early warning output at step S60 is conducted by a control of making the warning device as the operation device 210 output an alarm under the circumstances a vehicle collision is predicted and of hastening the timing of outputting an alarm by the warning device as compared to the normal condition in which the driver's hand(s) is in the normal state.

In this embodiment, the state that the driver's hand(s) is out of the specified location and the state that the driver's hand(s) is moving are considered as a state that the driver's attention is diminished, that is, a state that the driver will easily delay to react for operation such as steering. In this case, it is effective to conduct the early warning output at step S60 because the delay in reaction of the driver can be compensated. Instead of the control of hastening the timing for outputting the alarm by the warning device as compared to the normal condition in which the driver's hand(s) is in the normal state, a control of increasing the output intensity of an actuation signal to the warning device as compared to the normal condition in which the driver's hand(s) is in the normal state may be employed. By employing the control, it is possible to stir the driver to concentrate on driving. This is effective for a case that the driver may become accustomed to the alarm. When the driver's hand(s) is moving, the time required to conduct the processes after step S56 is shortened according to the magnitude of movement (amount of displacement) of the hand(s). By shortening the time, it is preferable to hasten the process of detecting whether or not the driver's attention is diminished.

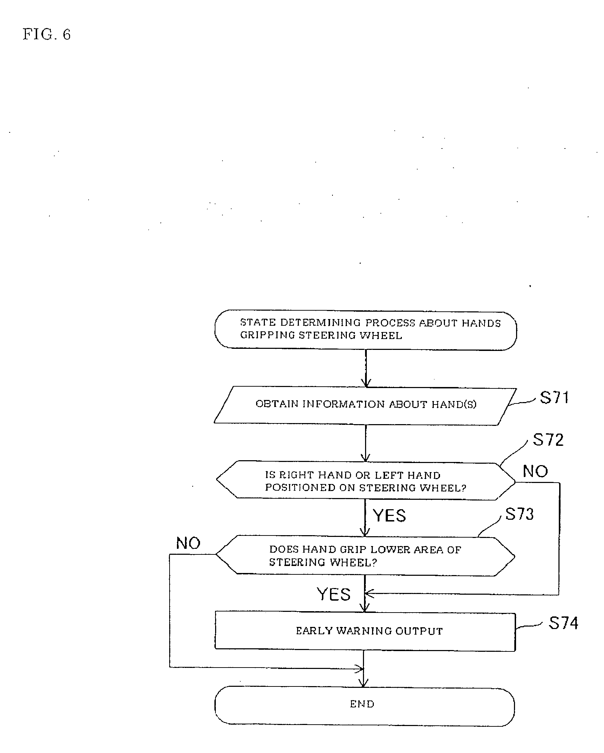

Details of step S70 in Fig. 2 will be described with reference to Fig. 6. Fig. 6 shows a flow chart of the "state determining process about hands gripping the steering wheel" in Fig. 2. In this determining process, step S71 through step S74 shown in Fig. 6 are sequentially conducted.

First, at step S71, the features of the driver's hands are read out from the storing unit 170. At step S72, the detection processing section 154 shown in Fig. 1 detects whether or not at least one of the driver's hands is on the steering wheel. Specifically, a predetermined range around the steering wheel is previously specified. When the driver's hand(s) within the aforementioned range is detected, it is detected that at least one of the driver's hands is on the steering wheel. When the driver's hand within the aforementioned range is not detected, it is detected that both the driver's hands are not in the specified location. If it is detected that the driver's hand(s) is in the specified location (Yes in step S72), the procedure proceeds to step S73. If it is detected that the driver's hands are not in the specified location (No in step S72), the procedure proceeds to step S74 to conduct an early warning output.

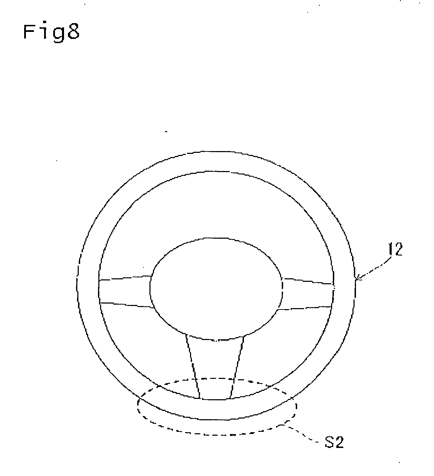

At step S73, the detection processing portion 154 shown in Fig. 1 detects whether or not the driver's hand(s) grips a lower area of the steering wheel. Specifically, a predetermined range in which the hand(s) gripping the lower area of the steering wheel should exist is previously set. When the driver's hand(s) within the aforementioned range is detected, it is detected that the driver's hand(s) grips the lower area of the steering wheel. When the driver's hand within the aforementioned range is not detected, it is detected that the driver's hands do not grip the lower area of the steering wheel. The range is defined, for example as shown in Fig. 8, as a lower area S2 of the steering wheel 12 to be gripped by the driver's hand(s). In case of a steering wheel with three spokes, the lower area S2 is an area including a joint between a spoke extending downwardly from a center pad portion of the steering wheel and a wheel portion of the steering wheel and a peripheral area around the joint. In case of a steering wheel with four spokes, the lower area S2 is an area defined between two spokes extending obliquely downwardly from a center pad portion of the steering wheel and a wheel portion of the steering wheel. If it is detected that the driver's hand(s) grips the lower area of the steering wheel (Yes in step S73), the procedure proceeds to step S74 to conduct the early warning output. If it is detected that the driver's hands do not grip the lower area of the steering wheel (No in step S73), the process is directly terminated. Similarly to the early warning output at step 40, the early warning output at step S74 is conducted by a control of making the warning device as the operation device 210 output an alarm under the circumstances a vehicle collision is predicted and of hastening the timing of outputting an alarm by the warning device as compared to the normal condition in which the driver's head is in the normal state.

In this embodiment, the state that the driver's hand(s) grips the lower area of the steering wheel is considered as a state that the driver will easily delay to react for operation such as steering. In this case, it is effective to conduct the early warning output at step S74 because the delay in reaction of the driver can be compensated. Instead of the control of hastening the timing for outputting the alarm by the warning device as compared to the normal condition in which the driver's hand(s) is in the normal state, a control of increasing the output intensity of an actuation signal to the warning device as compared to the normal condition in which the driver's hand(s) is in the normal state may be employed. By employing the control, it is possible to stir the driver to concentrate on driving. This is effective for a case that the driver may become accustomed to the alarm.

According to the occupant detection system 100 of this embodiment as mentioned above, the detection of whether or not the driver's attention is diminished is achieved by the respective processes based on the three-dimensional images taken by the 3D camera 112. That is, even when there is a small difference in color between the background and the driver or a small difference in color between the skin and the clothes of the driver, or even in case of detecting the position of the head of the driver who is in a state leaning forward, the arrangement of detecting three-dimensional image ensures precise detection as compared with the arrangement of detecting two-dimensional image.

According to this embodiment, the actuation of the operation device 210 can be controlled in a suitable aspect according to the results of the detection of the occupant detection system 100, thereby enabling detailed control for the operation device 210.

Further, according to this embodiment, there is provided a vehicle mounted capable of precisely controlling the operation device 210 in a suitable aspect according to the results of the accurate detection of the occupant detection system 100.

### (Other embodiments)

The present invention is not limited to the aforementioned embodiments and various applications and modifications may be made. For example, the following respective embodiments based on the aforementioned embodiments may be carried out.

Though the aforementioned embodiment shown in Fig. 2 through Fig. 6 has been described with regard to a case for using as the operation device 210 the warning device for informing of a possibility of a vehicle collision based on the information from radar or camera, a braking device for applying braking forces to the vehicle according to a pedaling force of a driver, a vibration device mounted to a supporting device for preventing an occupant from submarining along the seat surface under the seat belt by pushing up the seat cushion in the event of a collision may be employed as the operation device 210 in the present invention.

In case of employing a braking device as the operation device 210, the input/output unit 190 is adapted not only to output a control signal for controlling the clearances between brake pads and a brake disk or between brake pads and a brake drum to the braking device but also to vary the output mode of the control signal to the braking device between when the determination processing section 158 determines that the driver's attention is diminished and when the determination processing section 158 determines that the driver's attention is not diminished. Specifically, for the purpose of hastening the start timing of braking, a mode in which the clearances between the brake pads and the brake disk or between the brake pads and the brake drum are set to be smaller than the normal one and a mode in which the operation speed of the brake pads is set to be higher than the normal one may be suitably employed.

In case of employing a vibration device mounted on the supporting device as the operation device 210, the input/output unit 190 is adapted to vary the output mode of a control signal to the vibration device between when the determination processing section 158 determines that the driver's attention is diminished and when the determination processing section 158 determines that the driver's attention is not diminished. Specifically, for the purpose of calling attention, a mode in which the portion to be vibrated by the vibration device is shifted right as compared to the normal case may be employed when the driver leans right because the gravity center of the driver is on the right side.

Though the aforementioned embodiments have been described with regard to a case of employing a single warning device as the operation device 210, a combination of a plurality of devices may be employed as the operation device 210 in the present invention.

For example, a lamp device on an instrument panel, a first vibration device mounted on a supporting device, and a second vibration device mounted on a steering wheel may be combined to compose the operation device 210. In this case, the input/output unit 190 is adapted to vary the output modes of control signals to the respective three devices (the lamp device, the first vibration device, and the second vibration device) between when the determination processing section 158 determines that the driver's attention is diminished and when the determination processing section 158 determines that the driver's attention is not diminished. Specifically, normally when a vehicle collision is predicted, these devices are actuated in the order of the lamp device, the first vibration device, and the second vibration device. On the other hand, when the driver takes one of his hands off the steering wheel to operate switches on the instrument panel so that it seems the driver's attention is diminished, the lamp device and the first vibration device are actuated at the same time before the second vibration device. Accordingly, this arrangement can prevent the driver from being accustomed to the alarm by changing the actuation order of these devices. Since the actuation of the lamp device and the first vibration device has high effect of calling the driver's attention, the arrangement of actuating the lamp device and the first vibration device before the second vibration device is especially effective in increasing the function of calling the driver's attention. Considering that the vibration by the second vibration device is hardly conducted to the driver during high speed driving, the actuation modes of the three devices may be changed according to the vehicle speed.

Alternatively, a lamp device on an instrument panel and a first vibration device mounted on a supporting device may be combined to compose the operation device 210. In this case, the input/output unit 190 is adapted to vary the output modes of control signals to the two devices (the lamp device and the first vibration device) between when the determination processing section 158 determines that the driver's attention is diminished and when the determination processing section 158 determines that the driver's attention is not diminished. Specifically, normally when a vehicle collision is predicted, these devices are actuated in the order of the lamp device, the first vibration device in a weak vibration mode, and the first vibration device in a strong vibration mode. On the other hand, when the driver takes one of his hands off the steering wheel to operate switches on the instrument panel so that it seems the driver's attention is diminished, the actuation of the lamp device and the strong vibration of the first vibration device are conducted at the same time. Accordingly, this arrangement can prevent the driver from being accustomed to the alarm by changing the actuation order of these devices.

Though the aforementioned embodiment has been described with regard to the arrangement of the occupant detection system 100 to be installed in an automobile, the present invention can be adopted to occupant detection systems to be installed in various vehicles such as an automobile, an airplane, a boat, a bus, and a train.

## Claims

1. An occupant detection system comprising:
a photographing section (110) for taking three-dimensional images of a driver on a vehicle seat within a predetermined moving range;
an information extracting section (152) which extracts at least either information about the position of the driver's head or the movement of the driver's head or information about the position of the driver's hand(s) or the movement of the driver's hand(s) based on the three-dimensional images taken by the photographing section (110);
a detection processing section (154) which detects whether or not the position or the movement of at least either the driver's head or the driver's hand(s) is in a preset specified state based on the information extracted by the information extracting section (152);
an integration processing section (156) which, when at least either the driver's head or the driver's hand(s) is out of the specified state, adds up time in which the driver's head or hand(s) is not in the specified state based on the detection results of the detection processing section (154); and
a determination processing section (158) which, based on the time added up by the integration processing section (156), determines that the driver's attention is diminished when the time added up exceeds a preset reference value and determines that the driver's attention is not diminished when the time added up is equal to or less than the preset reference value.

2. An occupant detection system as claimed in claim 1, further comprising an actuation signal outputting section (190), wherein the actuation signal outputting section (190) is adapted not only to output an actuation signal to one or more warning devices (210) for alarming the driver when a vehicle collision is predicted but also to vary the output mode of the actuation signal to the one or more warning devices (210) between when the determination processing section (158) determines that the driver's attention is diminished and when the determination processing section (158) determines that the driver's attention is not diminished.

3. An occupant detection system as claimed in claim 1 or 2, further comprising a control signal outputting section (190), wherein the control signal outputting section (190) is adapted not only to output a control signal for controlling the start timing of braking to a braking device (210) for applying braking forces to the vehicle according to a pedaling force of the driver but also to vary the output mode of the control signal to the braking device (210) between when the determination processing section (158) determines that the driver's attention is diminished and when the determination processing section (158) determines that the driver's attention is not diminished.

4. A warning system comprising:
an occupant detection system (100) as claimed in claim 1 or 3,
one or more warning devices (210) for alarming the driver; and
an actuation signal outputting section (190) which is adapted not only to output an actuation signal to the one or more warning devices when a vehicle collision is predicted and but also to vary the output mode of the actuation signal to the one or more warning devices (210) between when the determination processing section (158) determines that the driver's attention is diminished and when the determination processing section (158) determines that the driver's attention is not diminished.

5. A braking system comprising:
an occupant detection system (100) as claimed in claim 1 or 2,
a braking device (210) for applying braking forces to the vehicle according to a pedaling force of a driver; and
a control signal outputting section (190) which is adapted not only to output a control signal for controlling the start timing of braking to the braking device (210) but also to vary the output mode of the control signal to the braking device (210) between when the determination processing section (158) determines that the driver's attention is diminished and when the determination processing section (158) determines that the driver's attention is not diminished.

6. A vehicle comprising:
an engine/running system;
an electrical system;
an actuation control device (200) for conducting the actuation control of the engine/running system and the electrical system; and
an occupant detecting device for detecting information about a driver on a vehicle seat, wherein
the occupant detecting device comprises an occupant detection system (100) as claimed any one of claims 1-3.

7. A vehicle comprising:
an engine/running system;
an electrical system;
an actuation control device (200) for conducting the actuation control of the engine/running system and the electrical system; and
at least either the warning system (210) as claimed in claim 4 or the braking system (210) as claimed in claim 5.
